# EUROPEAN PATENT APPLICATION

(11) **EP 4 685 970 A1**
(43) Date of publication of application: **28.01.2026**
(21) Application number: 24895765.6
(22) Date of filing: 15.08.2024
(51) Int. Cl.: H01M 50/342, H01M 10/42, H01M 50/147

(54) **BATTERY CELL, BATTERY, AND ELECTRIC DEVICE**

(30) Priority: 28.11.2023 CN 202311621580
(71) Applicant: Contemporary Amperex Technology Co., Limited, Ningde, Fujian 352100 (CN)
(72) Inventor: WU, Kai, Ningde, Fujian 352100 (CN); CHEN, Xinxiang, Ningde, Fujian 352100 (CN); HUANG, Shoujun, Ningde, Fujian 352100 (CN); ZHENG, Yulian, Ningde, Fujian 352100 (CN); LUO, Yan, Ningde, Fujian 352100 (CN); CHEN, Long, Ningde, Fujian 352100 (CN); WANG, Peng, Ningde, Fujian 352100 (CN)
(74) Representative: Ran, Handong
(86) International application number: PCT/CN2024/112478
(87) International publication number: WO 2025/112664

(57) **Abstract**

A battery cell (200), a battery (400), and an electric device (500). The battery cell (200) comprises: an electrode assembly (300) comprising a positive electrode sheet and a negative electrode sheet, the positive electrode sheet and the negative electrode sheet form a flat region (301); and a housing (60) comprising a first wall portion (11) and two second wall portions (12), the two second wall portions (12) being respectively located on two sides of the flat region (301) in a first direction. The first wall portion (11) comprises a shell body (111) and a pressure relief portion (112), wherein the shell body (111) is arranged around the periphery of the pressure relief portion (112), a notch groove (113) is formed in the pressure relief portion (112) and has a first groove wall section (114) obliquely extending in the first direction on a bottom wall thereof, and the first groove wall section (114) is at an angle to the first direction.

## Description

### CROSS-REFERENCE TO RELATED APPLICATION

The present application is presented based on Chinese Patent Application No. 202311621580.1 filed on November 28, 2023, and claims the priority to the Chinese Patent Application described above, the content of which is incorporated herein by reference in its entirety.

### TECHNICAL FIELD

The present application relates to the field of batteries, and in particular, to a battery cell, a battery, and an electric device.

### BACKGROUND

In the related art, a battery cell includes a housing and an electrode assembly. The electrode assembly is disposed inside the housing, and the housing is provided with a pressure relief part. When the battery cell expands, the large surface of the housing deforms, and the deformation of the large surface of the housing exerts tensile forces on the housing wall of the housing provided with the pressure relief part, causing deformation of the housing wall of the housing provided with the pressure relief part, thereby subjecting the pressure relief part to tensile forces. This easily leads to damage of the pressure relief part, resulting in cracking of the pressure relief part, thereby affecting the normal operation of the pressure relief part.

### SUMMARY

The present application aims to solve, at least to a certain extent, at least one of the technical problems in the related art.

Therefore, an objective of the present application is to provide a battery cell.

Another objective of the present application is to provide a battery.

Another objective of the present application is to provide an electric device.

In a first aspect, embodiments of the present application provide a battery cell. The battery cell includes:
an electrode assembly including a positive electrode plate and a negative electrode plate, where the positive electrode plate and the negative electrode plate are stacked to form a flat region, and at least a part of the positive electrode plate and at least a part of the negative electrode plate are stacked at the flat region in a first direction; and
a housing configured to accommodate the electrode assembly, where the housing includes a first wall part and two second wall parts connected to the first wall part, and the two second wall parts are respectively located on two sides of the flat region in the first direction;
the first wall part includes a housing body and a pressure relief part, the housing body is disposed around an outer periphery of the pressure relief part, a scored groove is formed on the pressure relief part, the bottom wall of the scored groove is provided with a first groove wall segment extending obliquely in the first direction, and the first groove wall segment and the first direction form an included angle.

In the above technical solution, by allowing the first groove wall segment and the first direction to form an included angle, when the battery cell expands and exerts tensile forces on the first wall part, after the pressure relief part is subjected to the tensile forces, the first groove wall segment can decompose the received force, so that the angle of the force applied to the scored groove is changed, and the force applied to the scored groove is reduced, thereby improving the deformation resistance of the scored groove, reducing the risk of cracking of the pressure relief part, and reducing the impact of external force or deformation on the position of the scored groove of the pressure relief part.

In a second aspect, the embodiments of the present application further provide a battery. The battery includes the above battery cell.

In the above technical solution, by allowing the first groove wall segment and the first direction to form an included angle, when the battery cell expands and exerts tensile forces on the first wall part, after the pressure relief part is subjected to the tensile forces, the first groove wall segment can decompose the received force, so that the angle of the force applied to the scored groove is changed, and the force applied to the scored groove is reduced, thereby improving the deformation resistance of the scored groove, reducing the risk of cracking of the pressure relief part, and reducing the impact of external force or deformation on the position of the scored groove of the pressure relief part.

In a third aspect, the embodiments of the present application further provide an electric device. The electric device includes the above battery.

In the above technical solution, by allowing the first groove wall segment and the first direction to form an included angle, when the battery cell expands and exerts tensile forces on the first wall part, after the pressure relief part is subjected to the tensile forces, the first groove wall segment can decompose the received force, so that the angle of the force applied to the scored groove is changed, and the force applied to the scored groove is reduced, thereby improving the deformation resistance of the scored groove, reducing the risk of cracking of the pressure relief part, and reducing the impact of external force or deformation on the position of the scored groove of the pressure relief part.

The additional aspects and the advantages of the present application will be partially provided in the following description, will partially become apparent from the following description, or will be learned through the practice of the present application.

### BRIEF DESCRIPTION OF THE DRAWINGS

FIG. 1 is a schematic diagram of an electric device according to an embodiment of the present application;
FIG. 2 is an exploded view of a battery according to an embodiment of the present application;
FIG. 3 is a schematic diagram of a battery cell according to a first embodiment of the present application;
FIG. 4 is a schematic diagram from another angle of the battery cell according to the first embodiment of the present application;
FIG. 5 is an exploded view of the battery cell according to the first embodiment of the present application;
FIG. 6 is a schematic diagram of a battery cell according to a second embodiment of the present application; and
FIG. 7 is a schematic diagram of a pressure relief part disposed on a bottom housing wall according to an embodiment of the present application.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery mentioned in the embodiments of the present application refers to a single physical module including one or a plurality of battery cells to provide higher voltage and capacity. When there are a plurality of battery cells, the plurality of battery cells are connected in series, in parallel, or in series-parallel by a busbar component.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

Battery technology advancement requires consideration of various design factors at the same time, such as energy density, cycle life, discharge capacity, charging and discharging rate, and other performance parameters. In addition, the safety performance of the battery also needs to be considered.

In the battery cell, in order to ensure the safety performance of the battery cell, a pressure relief part may be disposed on the housing of the battery cell. When the battery cell undergoes thermal runaway, the pressure inside the battery cell is relieved through the pressure relief part, so as to improve the safety of the battery cell.

During use of the battery cell in charging and discharging, the electrode assembly may undergo hard expansion, causing the housing to bulge and deform. Since the pressure relief part is disposed on the housing, especially some pressure relief parts are disposed on the wall part on the side proximal to the electrode assembly, the expansion of the electrode assembly may deform the wall part where the pressure relief part is located, such that the score of the pressure relief part is subjected to tensile forces, resulting in rupture at the score of the pressure relief part and thereby causing liquid leakage and other issues. As a result, the rupture may occur when the pressure inside the battery cell has not reached the burst pressure of the pressure relief part, leading to failure of the pressure relief part and reduced reliability of the pressure relief part.

In view of this, the embodiments of the present application provide a battery cell, which includes an electrode assembly and a housing. The housing is configured to accommodate the electrode assembly, and the housing includes a first wall part and two second wall parts connected to the first wall part. The first wall part includes a housing body and a pressure relief part, and the housing body is disposed around the outer periphery of the pressure relief part. A scored groove is formed on the pressure relief part, the bottom wall of the scored groove has a first groove wall segment extending obliquely in a first direction, and the first groove wall segment and the first direction form an included angle.

In such a battery cell, by allowing the first groove wall segment and the first direction to form an included angle, when the battery cell expands and tensile forces are exerted on the first wall part, after the pressure relief part is subjected to the tensile forces, the angle of the force applied to the scored groove can be changed, and the force applied to the scored groove is reduced, thereby improving the deformation resistance of the scored groove, reducing the risk of cracking of the pressure relief part, and reducing the impact of external force or deformation on the position of the scored groove of the pressure relief part.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

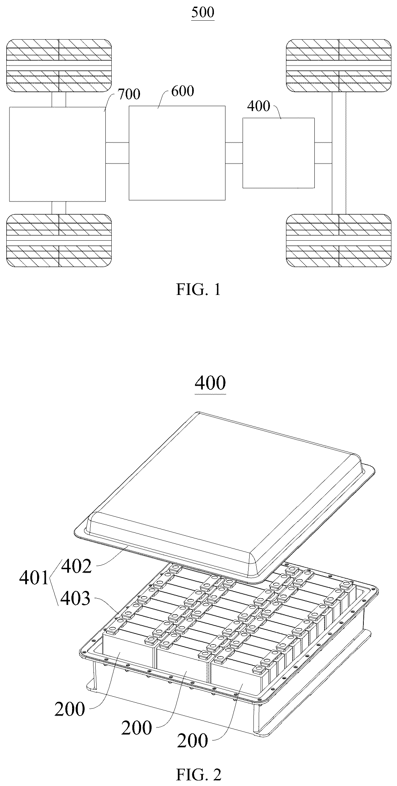

Referring to FIG. 1, FIG. 1 is a schematic structural diagram of a vehicle according to some embodiments of the present application. A battery 400 is disposed inside the vehicle, and the battery 400 may be disposed at the bottom, head, or rear of the vehicle. The battery 400 may be configured to supply power to the vehicle. For example, the battery 400 may serve as an operation power source for the vehicle.

The vehicle may further include a controller 600 and a motor 700. The controller 600 is configured to control the battery 400 to supply power to the motor 700, e.g., for operation power needed by the vehicle for start-up, navigation, and driving.

In some embodiments of the present application, the battery 400 may not only serve as the operation power source for the vehicle, but also as a driving power source for the vehicle to, instead of or in part instead of petrol or diesel or natural gas, provide driving power for the vehicle.

Referring to FIG. 2, FIG. 2 is an exploded view of a battery 400 according to some embodiments of the present application. The battery 400 includes battery cells 200 and a case 401, and the case 401 is configured to accommodate the battery cells 200.

The case 401 is a component for accommodating the battery cells 200, the case 401 provides a placement space for the battery cells 200, and the case 401 may be of various structures. In some embodiments, the case 401 may include a first case body 402 and a second case body 403. The first case body 402 and the second case body 403 are mutually lidded with each other to define a placement space for accommodating the battery cells 200. The first case body 402 and the second case body 403 may be in various shapes, such as a rectangular parallelepiped and a cylinder. The first case body 402 may be of a hollow structure with one side open, the second case body 403 may also be of a hollow structure with one side open, and the open side of the first case body 402 is lidded with the open side of the second case body 403 to form the case 401 having a placement space. Alternatively, the first case body 402 may be of a hollow structure with one side open, the second case body 403 may be of a plate-shaped structure, and the open side of the first case body 402 is lidded with the second case body 403 to form the case 401 having a placement space. As an example, the battery cell 200 may be a cylindrical battery cell, a prismatic battery cell, a pouch battery cell, or a battery cell 200 of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In the battery 400, one or a plurality of battery cells 200 may be provided. If a plurality of battery cells 200 are provided, the plurality of battery cells 200 may be connected in series, in parallel, or in series-parallel. The series-parallel connection means that both series connection and parallel connection are present in the connection of the plurality of battery cells 200. The situation may be that the plurality of battery cells 200 are first connected in series, in parallel, or in series-parallel to form battery modules, and then the plurality of battery modules are connected in series, in parallel, or in series-parallel to form a whole to be accommodated in the case 401. Alternatively, all the battery cells 200 may be directly connected in series, in parallel, or in series-parallel, and then the whole formed by all the battery cells 200 is accommodated in the case 401.

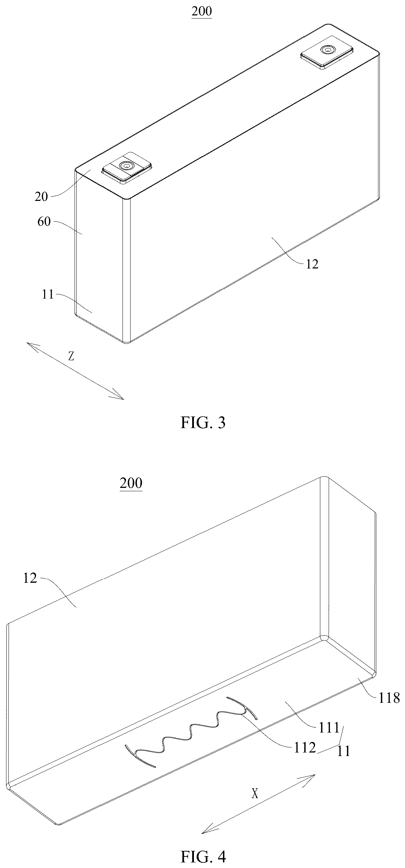

Referring to FIGs. 3, 5, and 6, the battery cell 200 may include a housing 60 and an electrode assembly 300.

The housing 60 is configured to accommodate components such as an electrode assembly 300 and an electrolyte. The housing 60 may be a steel housing, an aluminum housing, a plastic housing (such as polypropylene), a composite metal housing (such as a copper-aluminum composite housing), an aluminum-plastic film, or the like. As an example, the battery cell 200 may include an end cover 20 and a housing 60.

The housing 60 may be of a hollow structure with an opening formed at one end, or the housing 60 may also be of a hollow structure with openings formed at two opposite ends. The housing 60 may be made of various materials, such as copper, iron, aluminum, steel, and aluminum alloy.

The end cover 20 is a component that closes the opening of the housing 60 to isolate the internal environment of the battery cell 200 from the external environment. The end cover 20 and the housing 60 jointly define an accommodating space for accommodating the electrode assembly 300, the electrolytic solution, and other components. The end cover 20 may be connected to the housing 60 by welding or winding to close the opening of the housing 60. The shape of the end cover 20 may be adapted to the shape of the housing 60. For example, the housing 60 is of a rectangular parallelepiped structure, and the end cover 20 is of a rectangular plate-shaped structure adapted to the housing 60. The end cover 20 may also be made of various materials, such as copper, iron, aluminum, steel, and aluminum alloy.

In the battery cell 200, one or two end covers 20 may be provided. In an embodiment in which the housing 60 is of a hollow structure with openings formed at two ends, two end covers 20 may be correspondingly provided. The two end covers 20 respectively close the two openings of the housing 60, and the two end covers 20 and the housing 60 jointly define the accommodating space. In an embodiment in which the housing 60 is of a hollow structure with an opening formed at one end, one end cover 20 may be correspondingly provided. The end cover 20 closes the opening at one end of the housing 60, and the one end cover 20 and the housing 60 jointly define the accommodating space.

The electrode assembly 300 includes a positive electrode, a negative electrode, and a separator. During the charging and discharging process of the battery cell 200, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, the positive electrode plate may include a positive electrode current collector and a positive electrode active substance zone disposed on at least one surface of the positive electrode current collector, and the positive electrode active substance zone has a positive electrode active material.

As an example, the positive electrode current collector has two surfaces opposite to each other in its own thickness direction, and the positive electrode active substance zone is disposed on any one or both of the two opposite surfaces of the positive electrode current collector.

In some embodiments, the negative electrode may be a negative electrode plate, and the negative electrode plate may include a negative electrode current collector and a negative electrode active substance zone disposed on at least one surface of the negative electrode current collector.

As an example, the negative electrode current collector has two surfaces opposite to each other in its own thickness direction, and the negative electrode active substance zone is disposed on any one or both of the two opposite surfaces of the negative electrode current collector.

In some embodiments, the material of the positive electrode current collector may be aluminum, and the material of the negative electrode current collector may be copper.

In some embodiments, the electrode assembly 300 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell 200 further includes an electrolyte that serves to conduct ions between the positive electrode and the negative electrode. The present application does not specifically limit the type of the electrolyte, which can be selected according to needs. The electrolyte may be liquid-state, gel-state, or solid-state.

In some embodiments, the electrode assembly 300 is of a wound structure. The positive electrode plate and the negative electrode plate are wound to form a wound structure.

In some embodiments, the electrode assembly 300 is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided, and each separator is disposed between any adjacent positive electrode plates or negative electrode plates separately.

As an example, the separators may be disposed continuously between any adjacent positive electrode plates or negative electrode plates by folding or winding.

In some embodiments, the shape of the electrode assembly 300 may be flat, multi-prismatic, or the like.

In some embodiments, the electrode assembly 300 is provided with tabs that can conduct current out from the electrode assembly 300. The tabs include a positive electrode tab and a negative electrode tab.

The electrode assembly 300 includes a plurality of electrode plates disposed in a wound manner, and an outer peripheral surface of the electrode assembly 300 includes a flat region 301.

A plurality of electrode plates are wound, that is, the positive electrode plates and the negative electrode plates are stacked and then wound around a set axis, to form the electrode assembly 300. The flat region 301 refers to a part of the electrode plate that extends along a plane when being wound. Two opposite side surfaces of the electrode assembly 300 in the first direction are formed as the flat regions 301.

The battery cell 200 according to the embodiments of the present application is described below with reference to FIGs. 3-7.

A battery cell 200 according to the embodiments of the present application includes: an electrode assembly 300 including a positive electrode plate and a negative electrode plate, where the positive electrode plate and the negative electrode plate are stacked to form a flat region 301, and at least a part of the positive electrode plate and at least a part of the negative electrode plate are stacked at the flat region 301 in a first direction; and a housing 60 configured to accommodate the electrode assembly 300, where the housing 60 includes a first wall part 11 and two second wall parts 12 connected to the first wall part 11, and the two second wall parts 12 are respectively located on two sides of the flat region 301 in the first direction, where the first wall part 11 includes a housing body 111 and a pressure relief part 112, the housing body 111 is disposed around the outer periphery of the pressure relief part 112, a scored groove 113 is formed on the pressure relief part 112, a bottom wall of the scored groove 113 is provided with a first groove wall segment 114 extending obliquely in the first direction, and the first groove wall segment 114 and the first direction form an included angle.

The electrode assembly 300 includes a positive electrode plate and a negative electrode plate. For example, the electrode assembly 300 includes at least one positive electrode plate and at least one negative electrode plate, and the at least one positive electrode plate and the at least one negative electrode plate are stacked to form the electrode assembly 300. The positive electrode plate and the negative electrode plate are stacked to form a flat region 301. At the flat region 301, at least a part of the positive electrode plate and at least a part of the negative electrode plate are stacked in the first direction, such that the expansion of the electrode assembly 300 is mainly exhibited in the first direction. When the battery cell 200 is placed in the direction shown in FIG. 3, the first direction refers to the Z direction in FIG. 3. The outer peripheral surface of the electrode assembly 300 has the flat region 301.

The electrode assembly 300 may also be of a wound type. The positive electrode plate and the negative electrode plate of the electrode assembly 300 are stacked with the separation film and then wound, and the flat region 301 is formed. At the flat region 301, a part of the positive electrode plate and a part of the negative electrode plate are stacked in the first direction. For example, after the winding, each layer of the positive electrode plate and each layer of the negative electrode plate can be penetrated by an axis extending in the first direction, such that the expansion of the electrode assembly 300 is mainly exhibited in the first direction.

The housing 60 defines an open mounting cavity 30, and the electrode assembly 300 of the battery cell 200 is mounted in the mounting cavity 30. The housing 60 includes a first wall part 11 and two second wall parts 12. The two second wall parts 12 are respectively located on two sides of the electrode assembly 300 in the first direction, and the expansion of the electrode assembly 300 mainly acts on the second wall parts 12. The first wall part 11 is located between the two second wall parts 12, and the first wall part 11 is connected between the two second wall parts 12. The first wall part 11 and the two second wall parts 12 constitute the housing 60 of the above embodiments.

The first wall part 11 includes a housing body 111 and a pressure relief part 112. The housing body 111 is disposed around the outer periphery of the pressure relief part 112, and the pressure relief part 112 is fixedly disposed on the housing body 111. The pressure relief part 112 may be an anti-explosion valve, or the first wall part 11 is provided with a score structure to form the pressure relief part 112 on the first wall part 11. A scored groove 113 is formed on the pressure relief part 112. When the internal pressure threshold of the mounting cavity 30 reaches a certain level, the scored groove 113 of the pressure relief part 112 is opened, and the gas and substance inside the battery cell 200 are discharged from the pressure relief part 112 to achieve a pressure relief effect. The pressure threshold design varies depending on design requirements, and the pressure threshold may depend on the material of one or more of the positive electrode plate, the negative electrode plate, the electrolytic solution, and the separation film in the battery cell 200.

When the electrode assembly 300 expands, the first wall part 11 is less affected by the electrode assembly 300 than the second wall part 12 is affected by the electrode assembly 300. Since the pressure relief part 112 is located at the first wall part 11, the risk of the pressure relief part 112 being blocked or damaged due to the expansion of the electrode assembly 300 may be reduced.

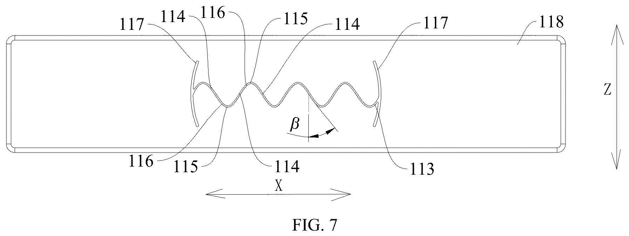

As shown in FIG. 7, the bottom wall of the scored groove 113 is provided with a first groove wall segment 114. The first groove wall segment 114 extends obliquely in the first direction, and the first groove wall segment 114 and the first direction form an included angle.

When the electrode assembly expands, the electrode assembly presses against the housing of the battery cell to push the housing outward, causing deformation of the housing. The housing is the main force-bearing surface and deforms greatly. When the housing deforms, the deformation of the housing exerts tensile forces on the pressure relief part, thereby subjecting the pressure relief part to tensile forces. This easily leads to damage of the pressure relief part, affecting the normal operation of the pressure relief part.

In the present application, the first groove wall segment 114 extends obliquely in the first direction, and the first groove wall segment 114 and the first direction form an included angle. When the electrode assembly 300 expands, the flat region 301 of the electrode assembly 300 presses against the second wall part 12 to push the housing 60 outward, causing deformation of the housing 60. The second wall part 12 of the housing 60 deforms greatly. When the second wall part 12 deforms, the deformation of the second wall part 12 exerts tensile forces on the first wall part 11 in the first direction, causing deformation of the first wall part 11. Since the first groove wall segment 114 and the first direction form the included angle, after the first groove wall segment 114 is subjected to the force, the first groove wall segment 114 may decompose the received force into component forces in the first direction and the second direction, which may change the angle of the force applied to the scored groove 113. The second direction is perpendicular to the first direction, and the second direction is the length direction of the first wall part 11. As shown in FIGs. 4, 6, and 7. the second direction is the X direction in FIGs. 4, 6, and 7. Therefore, the force applied to the scored groove 113 is reduced, the deformation resistance of the scored groove 113 can be improved, the risk of cracking of the pressure relief part 112 is reduced, the impact of external force or deformation on the position of the scored groove 113 of the pressure relief part 112 is reduced, and the risk of liquid leakage of the pressure relief part 112 is reduced, which is conducive to maintaining the normal operation of the pressure relief part 112, thereby increasing the fatigue life of the pressure relief part 112.

In the above technical solution, by allowing the first groove wall segment 114 and the first direction to form an included angle, when the battery cell 200 expands and exerts tensile forces on the first wall part 11, after the pressure relief part 112 is subjected to the tensile forces, the first groove wall segment 114 can decompose the received force, so that the angle of the force applied to the scored groove 113 is changed, and the force applied to the scored groove 113 is reduced, thereby improving the deformation resistance of the scored groove 113, reducing the risk of cracking of the pressure relief part 112, and reducing the impact of external force or deformation on the position of the scored groove 113 of the pressure relief part 112.

According to some embodiments of the present application, as shown in FIG. 7, the included angle between the first groove wall segment 114 and the first direction is greater than or equal to 20° and less than or equal to 70°.

The first groove wall segment 114 may be linear, or the first groove wall segment 114 is approximately linear. As shown in FIG. 7, the included angle between the first groove wall segment 114 and the first direction is β, and the following relationship is satisfied: 20° ≤ β ≤ 70°, where β may be 20°, 30°, 35°, 40°, 70°, or the like. By making the included angle between the first groove wall segment 114 and the first direction greater than or equal to 20° and less than or equal to 70°, the included angle between the first groove wall segment 114 and the first direction may be appropriate. When the electrode assembly 300 expands, after the first groove wall segment 114 is subjected to the force, the first groove wall segment 114 may decompose the received force, which is conducive to reducing the force applied to the scored groove 113, thereby further improving the deformation resistance of the scored groove 113, and further reducing the risk of cracking of the pressure relief part 112.

In the above technical solution, by making the included angle between the first groove wall segment 114 and the first direction greater than or equal to 20° and less than or equal to 70°, the included angle between the first groove wall segment 114 and the first direction may be appropriate. When the electrode assembly 300 expands, after the first groove wall segment 114 is subjected to the force, the first groove wall segment 114 may decompose the received force, which is conducive to reducing the force applied to the scored groove 113, thereby further improving the deformation resistance of the scored groove 113, and further reducing the risk of cracking of the pressure relief part 112.

According to some embodiments of the present application, as shown in FIG. 7, a plurality of first groove wall segments 114 may be provided, and the plurality of first groove wall segments 114 are arranged sequentially in a second direction perpendicular to the first direction.

A plurality of first groove wall segments 114 may be provided, and the plurality of first groove wall segments 114 are arranged sequentially in the second direction. Two adjacent first groove wall segments 114 may be spaced apart from each other, and the number of the plurality of first groove wall segments 114 may be reasonably selected according to the length of the wall of the first wall part 11 provided with the pressure relief part 112. By providing the plurality of first groove wall segments 114, when the first wall part 11 deforms, after the plurality of first groove wall segments 114 are subjected to the force, the plurality of first groove wall segments 114 may simultaneously decompose the received force into component forces in the first direction and the second direction, such that the force applied to the scored groove 113 is further reduced, the deformation resistance of the scored groove 113 may be further improved, the risk of cracking of the pressure relief part 112 is further reduced, the impact of external force or deformation on the position of the scored groove 113 of the pressure relief part 112 is further reduced, and the risk of liquid leakage of the pressure relief part 112 is further reduced, which is conducive to maintaining the normal operation of the pressure relief part 112, thereby further increasing the fatigue life of the pressure relief part 112. In addition, providing the plurality of first groove wall segments 114 is conducive to enabling the pressure relief part 112 to open most rapidly under the force when gas is generated at a certain position of the battery cell 200.

In the above technical solution, by providing the plurality of first groove wall segments 114, the plurality of first groove wall segments 114 can simultaneously decompose the received force into component forces in the first direction and the second direction, such that the force applied to the scored groove 113 is further reduced, the deformation resistance of the scored groove 113 may be further improved, the risk of cracking of the pressure relief part 112 is further reduced, the impact of external force or deformation on the position of the scored groove 113 of the pressure relief part 112 is further reduced, and the risk of liquid leakage of the pressure relief part 112 is further reduced, which is conducive to maintaining the normal operation of the pressure relief part 112, thereby further increasing the fatigue life of the pressure relief part 112. In addition, this is conducive to enabling the pressure relief part 112 to open most rapidly under the force when gas is generated at a certain position of the battery cell 200.

Further, some first groove wall segments 114 of the plurality of first groove wall segments 114 are parallel to each other, the other first groove wall segments 114 are parallel to each other, and extension lines of two adjacent first groove wall segments 114 form an included angle. In this way, when the first wall part 11 deforms, after the plurality of first groove wall segments 114 are subjected to the force, the plurality of first groove wall segments 114 can simultaneously decompose the received force into component forces in the first direction and the second direction, effectively mitigating the force applied to the scored groove 113, thereby further improving the deformation resistance of the scored groove 113, and further reducing the risk of cracking of the pressure relief part 112.

According to some embodiments of the present application, as shown in FIG. 7, the bottom wall of the scored groove 113 is further provided with second groove wall segments 115, and a second groove wall segment 115 is connected between two adjacent first groove wall segments 114.

The bottom wall of the scored groove 113 may be further provided with second groove wall segments 115. A second groove wall segment 115 is connected between two adjacent first groove wall segments 114, such that the plurality of first groove wall segments 114 may be connected to form a strip-shaped structure, which is conducive to simplifying the scored groove 113.

In the above technical solution, by allowing a second groove wall segment 115 to be connected between every two adjacent first groove wall segments 114, the plurality of first groove wall segments 114 may be connected to form a strip-shaped structure, which is conducive to simplifying the scored groove 113.

According to some embodiments of the present application, as shown in FIG. 7, the thickness of the second groove wall segment 115 is greater than the thickness of the first groove wall segment 114.

The thickness dimension of the second groove wall segment 115 being greater than the thickness dimension of the first groove wall segment 114 may also be interpreted in the following way: the minimum thickness dimension of the second groove wall segment 115 is greater than the maximum thickness dimension of the first groove wall segment 114. As shown in FIG. 7, The second groove wall segment 115 is perpendicular to or substantially perpendicular to the first direction. When the electrode assembly 300 expands, the flat region 301 of the electrode assembly 300 presses against the second wall part 12 to push the housing 60 outward, and the deformation of the second wall part 12 exerts tensile forces on the first wall part 11 in the first direction. However, since the second groove wall segment 115 is perpendicular to or substantially perpendicular to the first direction, compared with the force applied to the first groove wall segment 114, the force applied to the second groove wall segment 115 may be greater than the force applied to the first groove wall segment 114. Therefore, by setting the thickness of the second groove wall segment 115 to be greater than the thickness of the first groove wall segment 114, the structural strength of the second groove wall segment 115 is not less than the structural strength of the first groove wall segment 114, such that the second groove wall segment 115 can meet the structural strength requirements, which is conducive to improving the overall structural strength of the scored groove 113, thereby improving the deformation resistance of the scored groove 113, and further reducing the risk of cracking of the pressure relief part 112.

In the above technical solution, by setting the thickness of the second groove wall segment 115 to be greater than the thickness of the first groove wall segment 114, the second groove wall segment 115 can meet the structural strength requirements, which is conducive to improving the overall structural strength of the scored groove 113, thereby improving the deformation resistance of the scored groove 113, and further reducing the risk of cracking of the pressure relief part 112.

According to some embodiments of the present application, as shown in FIG. 7, the bottom wall of the scored groove 113 is further provided with arc-shaped third groove wall segments 116, and a third groove wall segment 116 is connected between the first groove wall segment 114 and the second groove wall segment 115 adjacent to each other.

The bottom wall of the scored groove 113 is provided with third groove wall segments 116. The third groove wall segment 116 is of an arc-shaped structure, and a third groove wall segment 116 is connected between the first groove wall segment 114 and the second groove wall segment 115 adjacent to each other. By configuring the third groove wall segment 116 as an arc-shaped structure, a transition groove wall segment can be formed between the first groove wall segment 114 and the second groove wall segment 115. After the pressure relief part 112 is subjected to the force, this configuration is conducive to reducing the risk of the generation of stress concentration at the bottom wall of the scored groove 113, thereby further improving the deformation resistance of the scored groove 113, and further reducing the risk of cracking of the pressure relief part 112.

In the above technical solution, by allowing the third groove wall segment 116 to be of an arc-shaped structure and allowing the third groove wall segment 116 to be connected between the first groove wall segment 114 and the second groove wall segment 115 adjacent to each other, a transition groove wall segment can be formed between the first groove wall segment 114 and the second groove wall segment 115. After the pressure relief part 112 is subjected to the force, this configuration is conducive to reducing the risk of the generation of stress concentration at the bottom wall of the scored groove 113, thereby further improving the deformation resistance of the scored groove 113, and further reducing the risk of cracking of the pressure relief part 112.

According to some embodiments of the present application, as shown in FIG. 7, the third groove wall segment 116 is of a circular arc-shaped structure.

The third groove wall segment 116 may be configured as a circular arc-shaped structure, and the length of the third groove wall segment 116 may be reasonably selected according to actual situations. By configuring the third groove wall segment 116 as a circular arc-shaped structure, a circular arc transition groove wall segment can be formed between the first groove wall segment 114 and the second groove wall segment 115, allowing a smooth transition between the first groove wall segment 114 and the second groove wall segment 115. After the pressure relief part 112 is subjected to the force, this configuration is more conducive to reducing the risk of the generation of stress concentration at the bottom wall of the scored groove 113, thereby further improving the deformation resistance of the scored groove 113, and further reducing the risk of cracking of the pressure relief part 112.

In the above technical solution, by configuring the third groove wall segment 116 as a circular arc-shaped structure, a circular arc transition groove wall segment can be formed between the first groove wall segment 114 and the second groove wall segment 115, allowing a smooth transition between the first groove wall segment 114 and the second groove wall segment 115. After the pressure relief part 112 is subjected to the force, this configuration is more conducive to reducing the risk of the generation of stress concentration at the bottom wall of the scored groove 113, thereby further improving the deformation resistance of the scored groove 113, and further reducing the risk of cracking of the pressure relief part 112.

According to some embodiments of the present application, the thickness of the third groove wall segment 116 gradually increases in the direction from the first groove wall segment 114 to the second groove wall segment 115.

In the length direction of the scored groove 113, the thickness dimension of the third groove wall segment 116 gradually increases in the direction from the first groove wall segment 114 to the second groove wall segment 115. Since the thickness dimension of the second groove wall segment 115 is greater than the thickness dimension of the first groove wall segment 114, by allowing the thickness dimension of the third groove wall segment 116 to gradually increase in the direction from the first groove wall segment 114 to the second groove wall segment 115, the groove wall between the first groove wall segment 114 and the second groove wall segment 115 can form a structure with gradually changing thickness, allowing a smooth and gentle transition between the first groove wall segment 114 and the second groove wall segment 115. After the pressure relief part 112 is subjected to the force, this configuration is more conducive to reducing the risk of the generation of stress concentration at the bottom wall of the scored groove 113, thereby further improving the deformation resistance of the scored groove 113, and further reducing the risk of cracking of the pressure relief part 112.

In the above technical solution, by allowing the thickness dimension of the third groove wall segment 116 to gradually increase in the direction from the first groove wall segment 114 to the second groove wall segment 115, the groove wall between the first groove wall segment 114 and the second groove wall segment 115 can form a structure with gradually changing thickness, allowing a smooth and gentle transition between the first groove wall segment 114 and the second groove wall segment 115. After the pressure relief part 112 is subjected to the force, this configuration is more conducive to reducing the risk of the generation of stress concentration at the bottom wall of the scored groove 113, thereby further improving the deformation resistance of the scored groove 113, and further reducing the risk of cracking of the pressure relief part 112.

According to some embodiments of the present application, as shown in FIG. 7, the second groove wall segment 115 is in an arc shape, and in the first direction, the second groove wall segment 115 protrudes toward the outer side of the housing body 111.

As shown in FIG. 7, the second groove wall segment 115 may be configured as an arc shape. In the first direction, the second groove wall segment 115 is disposed protruding toward the outer side of the housing body 111. That is, in the Z direction in FIG. 7, the second groove wall segment 115 is disposed protruding toward the outer side of the housing body 111. By allowing the second groove wall segment 115 to protrude toward the outer side of the housing body 111 in the first direction, the scored groove 113 can be configured as a wavy structure, and the structural shape of the scored groove 113 can be simplified, facilitating the processing on the pressure relief part 112 to form the scored groove 113, improving the production efficiency of the pressure relief part 112, and thereby improving the production efficiency of the battery cell 200.

In the above technical solution, by allowing the second groove wall segment 115 to be disposed protruding toward the outer side of the housing body 111 in the first direction, the scored groove 113 can be configured as a wavy structure, and the structural shape of the scored groove 113 can be simplified, facilitating the processing on the pressure relief part 112 to form the scored groove 113, improving the production efficiency of the pressure relief part 112, and thereby improving the production efficiency of the battery cell 200.

According to some embodiments of the present application, as shown in FIG. 7, the second groove wall segment 115 is in a circular arc shape, and the radius of the second groove wall segment 115 is greater than or equal to 1 mm and less than or equal to 10 mm.

The second groove wall segment 115 may be configured as a circular arc-shaped structure, the radius of the second groove wall segment 115 is greater than or equal to 1 mm and less than or equal to 10 mm, and the radius of the second groove wall segment 115 may be set to be 1 mm, 2 mm, 2.5 mm, 5 mm, 9 mm, 10 mm, or the like. By configuring the second groove wall segment 115 as a circular arc-shaped structure, a smooth transition can be formed at the bending portion of the scored groove 113. When the pressure relief part 112 is subjected to the force, the risk of the generation of stress concentration at the second groove wall segment 115 can be reduced. This is more conducive to reducing the risk of the generation of stress concentration at the bottom wall of the scored groove 113, thereby further improving the deformation resistance of the scored groove 113, and further reducing the risk of cracking of the pressure relief part 112.

In the above technical solution, by configuring the second groove wall segment 115 as a circular arc-shaped structure, a smooth transition can be formed at the bending portion of the scored groove 113. When the pressure relief part 112 is subjected to the force, the risk of the generation of stress concentration at the second groove wall segment 115 can be reduced. This is more conducive to reducing the risk of the generation of stress concentration at the bottom wall of the scored groove 113, thereby further improving the deformation resistance of the scored groove 113, and further reducing the risk of cracking of the pressure relief part 112.

According to some embodiments of the present application, the second groove wall segment 115 is of a linear structure, and the second groove wall segment 115 extends in the second direction.

The second groove wall segment 115 may be configured as a linear structure. It should be noted that the second groove wall segment 115 is of a linear structure, or the second groove wall segment 115 is of an approximately linear structure, and the second groove wall segment 115 extends in the second direction. By configuring the second groove wall segment 115 as a linear structure, the structural shape of the scored groove 113 can be further simplified, and the processing difficulty of the scored groove 113 is reduced, making it more convenient to process on the pressure relief part 112 to form the scored groove 113, further improving the production efficiency of the pressure relief part 112, and thereby further improving the production efficiency of the battery cell 200.

In the above technical solution, by configuring the second groove wall segment 115 as a linear structure, the structural shape of the scored groove 113 can be further simplified, and the processing difficulty of the scored groove 113 is reduced, making it more convenient to process on the pressure relief part 112 to form the scored groove 113, further improving the production efficiency of the pressure relief part 112, and thereby further improving the production efficiency of the battery cell 200.

According to some embodiments of the present application, the ratio of the maximum thickness of the second groove wall segment 115 to the minimum thickness of the first groove wall segment 114 is greater than or equal to 1.1 and less than or equal to 1.8.

In the length direction of the scored groove 113, the thickness dimension of the second groove wall segment 115 may remain unchanged or the thickness dimension of the second groove wall segment 115 gradually changes, and the thickness dimension of the first groove wall segment 114 may remain unchanged or the thickness dimension of the first groove wall segment 114 gradually changes. The ratio of the maximum thickness of the second groove wall segment 115 to the minimum thickness of the first groove wall segment 114 may be 1.1, 1.2, 1.3, 1.5, 1.8, or the like. As shown in FIG. 7, the second groove wall segment 115 is perpendicular to or substantially perpendicular to the first direction. When the electrode assembly 300 expands, the flat region 301 of the electrode assembly 300 presses against the second wall part 12 to push the housing 60 outward, and the deformation of the second wall part 12 exerts tensile forces on the first wall part 11 in the first direction. However, since the second groove wall segment 115 is perpendicular to or substantially perpendicular to the first direction, compared with the force applied to the first groove wall segment 114, the force applied to the second groove wall segment 115 is greater than the force applied to the first groove wall segment 114. Therefore, by allowing the ratio of the maximum thickness of the second groove wall segment 115 to the minimum thickness of the first groove wall segment 114 to be greater than or equal to 1.1 and less than or equal to 1.8, the structural strength of the second groove wall segment 115 is not less than the structural strength of the first groove wall segment 114, such that the second groove wall segment 115 can meet the structural strength requirements, which is more conducive to improving the overall structural strength of the scored groove 113, thereby further improving the deformation resistance of the scored groove 113, and further reducing the risk of cracking of the pressure relief part 112.

In the above technical solution, by allowing the ratio of the maximum thickness of the second groove wall segment 115 to the minimum thickness of the first groove wall segment 114 to be greater than or equal to 1.1 and less than or equal to 1.8, the structural strength of the second groove wall segment 115 is not less than the structural strength of the first groove wall segment 114, such that the second groove wall segment 115 can meet the structural strength requirements, which is more conducive to improving the overall structural strength of the scored groove 113, thereby further improving the deformation resistance of the scored groove 113, and further reducing the risk of cracking of the pressure relief part 112.

According to some embodiments of the present application, the ratio of the maximum thickness of the second groove wall segment 115 to the maximum thickness of the housing body 111 is greater than or equal to 0.05 and less than or equal to 0.5.

The ratio of the maximum thickness of the second groove wall segment 115 to the maximum thickness of the housing body 111 is greater than or equal to 0.05 and less than or equal to 0.5, and the ratio of the maximum thickness of the second groove wall segment 115 to the maximum thickness of the housing body 111 may be 0.05, 0.1, 0.2, 0.15, 0.3, 0.4, 0.5, or the like. By allowing the ratio of the maximum thickness of the second groove wall segment 115 to the maximum thickness of the housing body 111 to be greater than or equal to 0.05 and less than or equal to 0.5, when the battery cell 200 undergoes thermal runaway, the pressure relief part 112 may be cracked at the second groove wall segment 115 and the first groove wall segment 114 to achieve a pressure relief effect, thereby reducing the explosion risk of the battery cell 200.

In the above technical solution, by allowing the ratio of the maximum thickness of the second groove wall segment 115 to the maximum thickness of the housing body 111 to be greater than or equal to 0.05 and less than or equal to 0.5, when the battery cell 200 undergoes thermal runaway, the pressure relief part 112 may be cracked at the second groove wall segment 115 and the first groove wall segment 114 to achieve a pressure relief effect, thereby reducing the explosion risk of the battery cell 200.

According to some embodiments of the present application, as shown in FIG. 7, two reinforcing ribs 117 are formed on the housing body 111, and the two ends of the scored groove 113 are connected to the two reinforcing ribs 117, respectively.

The reinforcing ribs 117 and the housing body 111 may be integrally formed, and the scored groove 113 may be located between the two reinforcing ribs 117. One end of the scored groove 113 is connected to one reinforcing rib 117, and the other end of the scored groove 113 is connected to the other reinforcing rib 117. By allowing the two ends of the scored groove 113 to be respectively connected to the two reinforcing ribs 117, the reinforcing ribs 117 play a structural reinforcing effect, such that when the bottom wall of the scored groove 113 of the pressure relief part 112 cracks for pressure relief, the risk of continuously tearing the housing body 111 toward the two ends of the scored groove 113 can be reduced.

In the above technical solution, by allowing the two ends of the scored groove 113 to be respectively connected to the two reinforcing ribs 117, the reinforcing ribs 117 play a structural reinforcing effect, such that when the bottom wall of the scored groove 113 of the pressure relief part 112 cracks for pressure relief, the risk of continuously tearing the housing body 111 toward the two ends of the scored groove 113 can be reduced.

According to some embodiments of the present application, as shown in FIG. 7, the two reinforcing ribs 117 are opposite to and spaced apart from each other, and the reinforcing ribs 117 are in an arc shape.

The two reinforcing ribs 117 are disposed opposite to and spaced apart from each other in the second direction, the scored groove 113 is located between the two reinforcing ribs 117, each reinforcing rib 117 is in an arc shape, and the reinforcing rib 117 can be of a circular arc-shaped structure. By configuring the reinforcing rib 117 as an arc-shaped structure, the structural strength of the reinforcing rib 117 can be improved, such that when the bottom wall of the scored groove 113 of the pressure relief part 112 cracks for pressure relief, the risk of continuously tearing the housing body 111 toward the two ends of the scored groove 113 can be further reduced.

In the above technical solution, by configuring the reinforcing rib 117 as an arc-shaped structure, the structural strength of the reinforcing rib 117 can be improved, such that when the bottom wall of the scored groove 113 of the pressure relief part 112 cracks for pressure relief, the risk of continuously tearing the housing body 111 toward the two ends of the scored groove 113 can be further reduced.

According to some embodiments of the present application, as shown in FIG. 7, in the first direction, the pressure relief part 112 is located at a middle position of the housing body 111.

In the first direction, the pressure relief part 112 is located at a middle position of the housing body 111, and the pressure relief part 112 can be located at the exact center of the housing body 111. The scored groove 113 may be of a wavy structure. It should be noted that the pressure relief part 112 is deemed to be located at the middle position of the housing body 111 if the offset of the pressure relief part 112 in the first direction does not exceed 5% of the width dimension of the housing body 111. By allowing the pressure relief part 112 to be located at the middle position of the housing body 111 in the first direction, each position of the scored groove 113 can be subjected to uniform force, and the force applied to the scored groove 113 is reduced, which is conducive to enabling tearing at each position of the scored groove 113 under the same burst pressure, thereby further increasing the fatigue life of the pressure relief part 112.

In the above technical solution, by allowing the pressure relief part 112 to be located at the middle position of the housing body 111 in the first direction, each position of the scored groove 113 can be subjected to uniform force, and the force applied to the scored groove 113 is reduced, which is conducive to enabling tearing at each position of the scored groove 113 under the same burst pressure, thereby further increasing the fatigue life of the pressure relief part 112.

According to some embodiments of the present application, as shown in FIG. 4, the housing body 111 has a bottom housing wall 118 opposite to an open end 120 of the housing 60, and the pressure relief part 112 is disposed on the bottom housing wall 118.

The bottom housing wall 118 is configured to support the electrode assembly 300 and is located under the electrode assembly 300. The first wall part 11 is connected between the two second wall parts 12 to define a mounting cavity 30 with one end open. The housing body 111 has a bottom housing wall 118, and the bottom housing wall 118 is disposed opposite to the open end 120 of the mounting cavity 30. The end cover 20 is configured to close the open end 120 of the mounting cavity 30. The bottom housing wall 118 is disposed adjacent to the second wall part 12, and the area of the bottom housing wall 118 is less than the area of the second wall part 12.

In the above technical solution, by disposing the pressure relief part 112 on the bottom housing wall 118, the effect of pressure relief of the battery cell 200 toward the bottom can be achieved, and the risk of injuring surrounding personnel by the high-temperature and high-pressure substance ejected from the battery cell 200 can be reduced.

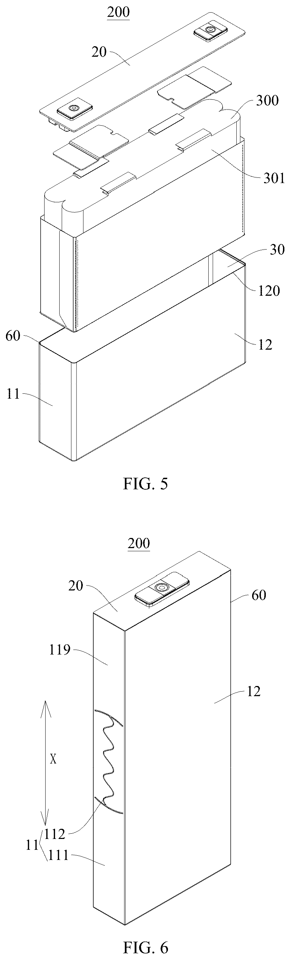

According to some embodiments of the present application, as shown in FIG. 6, the housing body 111 has a side housing wall 119 adjacent to the open end 120 of the housing 60, and the pressure relief part 112 is disposed on the side housing wall 119.

The first wall part 11 is connected between the two second wall parts 12 to define a mounting cavity 30 with one end open, and the end cover 20 is configured to close an open end 120 of the mounting cavity 30. The housing body 111 having a side housing wall 119 adjacent to the end cover 20 may also be interpreted in the following way: the side housing wall 119 is disposed adjacent to the open end 120 of the mounting cavity 30, the side housing wall 119 is further disposed adjacent to the second wall part 12, and the pressure relief part 112 is disposed on the side housing wall 119.

In the above technical solution, by disposing the pressure relief part 112 on the side housing wall 119, the effect of lateral pressure relief of the battery cell 200 can be achieved. During the pressure relief of the battery cell 200, high-temperature and high-pressure substances in the battery cell 200 can be rapidly discharged out of the battery cell 200.

According to some embodiments of the present application, the present application further provides a battery 400, which includes the battery cell 200 according to the above embodiments.

According to some embodiments of the present application, the present application further provides an electric device 500, which includes the battery 400 according to the above embodiments.

According to some embodiments of the present application, referring to FIGs. 4 and 7, the present application provides a battery cell 200. The battery cell 200 includes an end cover 20, a housing 60, and an electrode assembly 300. The housing 60 defines a mounting cavity 30, and the electrode assembly 300 is mounted in the mounting cavity 30. The end cover 20 closes an open end 120 of the mounting cavity 30 and is fixedly connected to the housing 60. The housing 6 includes a first wall part 11 and two second wall parts 12. The two second wall parts 12 are respectively located on two sides of the flat region 301 of the electrode assembly 300 in a first direction, and the second wall part 12 is opposite to the flat region 301 of the electrode assembly 300. The pressure relief part 112 is disposed on a bottom housing wall 118 of the housing body 111, and a scored groove 113 is formed on the pressure relief part 112. The bottom wall of the scored groove 113 is provided with a first groove wall segment 114 extending obliquely in the first direction, and the first groove wall segment 114 and the first direction form an included angle. The scored groove 113 may be of a wavy structure.

It should be noted that in the absence of conflicts, the embodiments and features in the embodiments in the present application may be combined with each other.

As shown in FIGs. 4 and 6, the battery cell 200 of the first embodiment differs from the battery cell 200 of the second embodiment in that: the pressure relief part 112 of the battery cell 200 of the first embodiment is disposed on the bottom housing wall 118, and the pressure relief part 112 of the battery cell 200 of the second embodiment is disposed on the side housing wall 119.

In the description of the specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it will be appreciated by those of ordinary skill in the art that various changes, modifications, replacements, and variations can be made to these embodiments without departing from the principle and purpose of the present application, and the scope of the present application is defined by the claims and equivalents thereof.

## Claims

1. A battery cell, comprising:
an electrode assembly, comprising a positive electrode plate and a negative electrode plate, wherein the positive electrode plate and the negative electrode plate are stacked to form a flat region, and at least a part of the positive electrode plate and at least a part of the negative electrode plate are stacked at the flat region in a first direction; and
a housing, configured to accommodate the electrode assembly, wherein:
the housing comprises a first wall part and two second wall parts connected to the first wall part, and the two second wall parts are respectively located on two sides of the flat region in the first direction, and
the first wall part comprises a housing body and a pressure relief part, the housing body is disposed around an outer periphery of the pressure relief part, a scored groove is formed on the pressure relief part, a bottom wall of the scored groove is provided with a first groove wall segment extending obliquely in the first direction, and the first groove wall segment and the first direction form an included angle.

2. The battery cell according to claim 1, wherein the included angle between the first groove wall segment and the first direction is greater than or equal to 20° and less than or equal to 70°.

3. The battery cell according to claim 1 or 2, wherein a plurality of first groove wall segments are provided, and the plurality of first groove wall segments are arranged sequentially in a second direction perpendicular to the first direction.

4. The battery cell according to claim 3, wherein the bottom wall of the scored groove is further provided with a second groove wall segment, and the second groove wall segment is connected between two adjacent first groove wall segments.

5. The battery cell according to claim 4, wherein a thickness of the second groove wall segment is greater than a thickness of the first groove wall segment.

6. The battery cell according to claim 5, wherein the bottom wall of the scored groove is further provided with an arc-shaped third groove wall segment, and the third groove wall segment is connected between the first groove wall segment and the second groove wall segment adjacent to each other.

7. The battery cell according to claim 6, wherein the third groove wall segment is of a circular arc-shaped structure.

8. The battery cell according to claim 6, wherein a thickness of the third groove wall segment gradually increases in a direction from the first groove wall segment to the second groove wall segment.

9. The battery cell according to any one of claims 4-8, wherein the second groove wall segment is in an arc shape, and in the first direction, the second groove wall segment protrudes toward an outer side of the housing body.

10. The battery cell according to claim 9, wherein the second groove wall segment is in a circular arc shape, and a radius of the second groove wall segment is greater than or equal to 1 mm and less than or equal to 10 mm.

11. The battery cell according to any one of claims 4-8, wherein the second groove wall segment is of a linear structure, and the second groove wall segment extends in the second direction.

12. The battery cell according to any one of claims 5-8, wherein a ratio of a maximum thickness of the second groove wall segment to a minimum thickness of the first groove wall segment is greater than or equal to 1.1 and less than or equal to 1.8.

13. The battery cell according to any one of claims 4-8, wherein a ratio of a maximum thickness of the second groove wall segment to a maximum thickness of the housing body is greater than or equal to 0.05 and less than or equal to 0.5.

14. The battery cell according to any one of claims 1-8, wherein two reinforcing ribs are formed on the housing body, and two ends of the scored groove are connected to the two reinforcing ribs, respectively.

15. The battery cell according to claim 14, wherein the two reinforcing ribs are opposite to and spaced apart from each other, and the reinforcing ribs each are in an arc shape.

16. The battery cell according to any one of claims 1-8, wherein in the first direction, the pressure relief part is located at a middle position of the housing body.

17. The battery cell according to any one of claims 1-8, wherein the housing body has a bottom housing wall opposite to an open end of the housing, and the pressure relief part is disposed on the bottom housing wall.

18. The battery cell according to any one of claims 1-8, wherein the housing body has a side housing wall adjacent to an open end of the housing, and the pressure relief part is disposed on the side housing wall.

19. A battery, comprising the battery cell according to any one of claims 1-18.

20. An electric device, comprising the battery according to claim 19.
